(19) Europäisches Patentamt
European Patent Office
Office européen des brevets

(11) **EP 3 599 440 A1**

(12) **EUROPÄISCHE PATENTANMELDUNG**

(43) Veröffentlichungstag:
**29.01.2020   Patentblatt 2020/05**

(51) Int Cl.:
*F28C 3/06* (2006.01)        *F02C 1/00* (2006.01)
*F02C 1/02* (2006.01)        *F02C 1/04* (2006.01)

(21) Anmeldenummer: **18185185.8**

(22) Anmeldetag: **24.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Danov, Vladimir**
  **91056 Erlangen (DE)**
• **Reißner, Florian**
  **90425 Nürnberg (DE)**
• **Schäfer, Jochen**
  **90408 Nürnberg (DE)**

(54) **VERFAHREN UND VORRICHTUNG ZUR VERDICHTUNG EINES GASES**

(57)    Es wird ein Verfahren zur Verdichtung eines Gases vorgeschlagen, bei dem ein Gas in einen Verdichtungsraum (2) für seine Verdichtung eingeleitet wird, bei dem eine Flüssigkeit (100) aus einem Zwischenbehälter (4) in den wenigstens teilweise mit dem Gas gefüllten Verdichtungsraum (2) gepumpt wird, bei dem wenigstens ein Teil der Flüssigkeit (100) mittels eines Berieselungskreislaufes (24) vom Verdichtungsraum (2) zu einer Berieselungsanlage (42) gepumpt wird, und bei dem mittels der Berieselungsanlage (42) eine Verteilung der Flüssigkeit (100) innerhalb des Verdichtungsraumes (2) erfolgt. Weiterhin betrifft die Erfindung eine Vorrichtung (1) zur Durchführung eines erfindungsgemäßen Verfahrens.

FIG 1

EP 3 599 440 A1

**Beschreibung**

Die Erfindung betrifft ein Verfahren zur Verdichtung eines Gases. Weiterhin betrifft die Erfindung eine Vorrichtung zur Durchführung eines Verfahrens gemäß der vorliegenden Erfindung und/oder einer ihrer Ausgestaltungen.

Bei einer Verdichtung eines Gases steigen durch die Kompressionsarbeit der Druck und die Temperatur des Gases an. Bei Annahme einer isentropen Verdichtung erfolgt für ein ideales Gas eine Erhöhung der Temperatur gemäß

$$T(p) = T_0 \cdot \left(\frac{p}{p_0}\right)^{(\kappa-1)/\kappa},$$

wobei $T_0$ die Temperatur vor der Verdichtung, $p_0$ den Druck vor der Verdichtung, $T(p)$ die Temperatur nach der Verdichtung, $p$ den Druck nach der Verdichtung und $\kappa$ den Isentropenexponenten (Adiabatenexponent) des Gases bezeichnet. Die Temperaturerhöhung ist somit von der Temperatur vor der Verdichtung, vom Druckverhältnis sowie vom Isentropenexponenten abhängig.

Eine Verdichtung eines Gases (Druckerhöhung) wird beispielsweise bei Druckluftspeicherkraftwerken verwendet. Hierbei wird mittels elektrischer Energie (elektrischer Strom) ein Gas verdichtet und das verdichtete Gas mittels eines Druckbehälters oder einer unterirdischen Druckkaverne gespeichert. Für eine spätere Bereitstellung von elektrischer Energie wird das verdichtete Gas zur Rückverstromung expandiert.

Hierbei ist es vorteilhaft einen möglichst hohen Anteil der Verdichtungsarbeit, die an dem Gas bei dessen Verdichtung geleistet wurde, zu speichern. Nach dem Stand der Technik geht bei Druckluftspeicherkraftwerken der Anteil der Verdichtungsarbeit, der zu einer Temperaturerhöhung des Gases führt, verloren. Das ist deshalb der Fall, da das Gas in den Druckbehältern typischerweise auf Umgebungstemperatur abkühlt. Dadurch gehen etwa 50 Prozent der isentropen Verdichtungsarbeit in Form von Wärme verloren. Somit ist der Wirkungsgrad von Druckluftspeicherkraftwerken auf einen Wirkungsgrad unterhalb von 50 Prozent beschränkt. Typischerweise werden Wirkungsgrade oberhalb von 40 Prozent nur schwer erreicht.

Weiterhin sind adiabate Druckluftspeicherkraftwerke bekannt, die einen höheren Wirkungsgrad aufweisen. Allerdings werden diese bisher kommerziell nicht verwendet. Bei einem adiabaten Druckluftspeicherkraftwerk wird die Wärme, die bei der Verdichtung des Gases erzeugt wird, zwischen einzelnen Verdichtungsstufen und/oder nach der Verdichtung des Gases vom verdichteten Gas auf ein Wärmeträgermedium übertragen. Bei einer anschließenden Expansion des Gases wird diese Wärme wieder auf das Gas übertragen. Dadurch wird ein deutlich höherer Wirkungsgrad ermöglicht. Die Herausforderung dieses Konzeptes besteht im Wesentlichen in seiner Wirtschaftlichkeit. Das ist deshalb der Fall, da die hierbei verwendete indirekte Wärmeübertragung große Wärmeübertrager und große Wärmespeicher erfordert.

Weiterhin kann zur Verdichtung eines Gases ein Flüssigkeitsringverdichter verwendet werden. Hierbei ist das zu verdichtende Gas im direkten Kontakt mit einer Ringflüssigkeit des Flüssigkeitsringverdichters, sodass die Wärme direkt vom Gas auf die Flüssigkeit übertragen wird. Allerdings weisen Flüssigkeitsringverdichter eine geringe Wärmeübertragungsfläche auf. Dadurch wird nur ein geringer Teil der bei der Verdichtung des Gases erzeugten Wärme tatsächlich auf die Ringflüssigkeit (Wärmeträgermedium) übertragen.

Weiterhin könnten Gase mit einem kleinen Isentropenexponenten ($\kappa \approx$ **1**) verwendet werden. Dadurch lässt sich die bei der Verdichtung erzeugte Wärme deutlich reduzieren. Allerdings ist ein Großteil der bekannten Gase mit kleinem Isentropenexponenten teuer, brennbar und/oder toxisch. Ihre Verwendung ist daher fraglich oder deutlich limitiert.

Der vorliegenden Erfindung liegt die Aufgabe zu Grunde, die bei einer Verdichtung eines Gases erzeugte Wärme verbessert nutzbar zu machen.

Die Aufgabe wird durch ein Verfahren mit den Merkmalen des unabhängigen Patentanspruches 1 sowie durch eine Vorrichtung mit den Merkmalen des unabhängigen Patentanspruches 15 gelöst. In den abhängigen Patentansprüchen sind vorteilhafte Ausgestaltungen und Weiterbildungen der Erfindung angegeben.

Bei dem erfindungsgemäßen Verfahren zur Verdichtung eines Gases wird das Gas in einen Verdichtungsraum für seine Verdichtung eingeleitet. Hierbei kann bevorzugt der Verdichtungsraum abgeschlossen sein. Weiterhin wird eine Flüssigkeit aus einem Zwischenbehälter in den wenigstens teilweise mit dem Gas gefüllten Verdichtungsraum gepumpt. Erfindungsgemäß wird wenigstens ein Teil der Flüssigkeit mittels eines Berieselungskreislaufes vom Verdichtungsraum zu einer Berieselungsanlage gepumpt, wobei mittels der Berieselungsanlage eine Verteilung der Flüssigkeit innerhalb des Verdichtungsraumes erfolgt.

Wird im Folgenden von einer Wärmeübertragung gesprochen, so ist darunter eine wenigstens teilweise Übertragung einer Wärme zu verstehen. Insbesondere ist ein vollständiges Übertragen der Wärme nicht erforderlich.

Gemäß des erfindungsgemäßen Verfahrens wird das Gas innerhalb des Verdichtungsraumes mittels der in den Verdichtungsraum gepumpten Flüssigkeit verdichtet. Das ist deshalb der Fall, da sich durch das Einpumpen der Flüssigkeit das Volumen, welches dem Gas innerhalb des Verdichtungsraumes zur Verfügung steht, reduziert. Insbesondere ist eine Flüssigkeit dadurch gekennzeichnet, dass diese ein inkompressibles Fluid ausbildet. Hierbei wird die Flüssigkeit erfindungsgemäß aus dem Zwischenbehälter entnommen. Mit anderen Worten umfasst der Zwischenbehälter die Flüssigkeit.

Gemäß des erfindungsgemäßen Verfahrens wird wenigstens ein Teil der Flüssigkeit mittels des Berieselungskreislaufes vom Verdichtungsraum zu einer Berieselungsanlage gepumpt und mittels der Berieselungsanlage innerhalb des Verdichtungsraumes verteilt, insbesondere feinteilig, beispielsweise in Form von Flüssigkeitstropfen, versprüht. Dadurch wird vorteilhafterweise eine möglichst große Wärmeübertragungsfläche zwischen dem Gas und der Flüssigkeit innerhalb des Verdichtungsraumes ermöglicht. Mit anderen Worten wird dadurch eine besonders vorteilhafte Wärmeübertragung zwischen dem Gas und der Flüssigkeit bei seiner Verdichtung bereitgestellt. Hierbei ist die Flüssigkeit als Verdrängungsmedium (Verdichtung des Gases) und als Wärmeübertragungsmedium vorgesehen. Mit anderen Worten wird erfindungsgemäß dieselbe Flüssigkeit als Verdrängungsmedium zur Verdichtung des Gases und als Wärmeübertragungsmedium zur wenigstens teilweisen Aufnahme der bei der Verdichtung erzeugten Wärme verwendet. Die besonders vorteilhafte Wärmeübertragung wird mittels des Berieselungskreislaufes und der Berieselungsanlage ermöglicht.

Erfindungsgemäß wird somit das Gas aufgrund der Verringerung des für das Gas zur Verfügung stehenden Volumens mittels der Flüssigkeit verdichtet. Dadurch steigt der Druck des Gases innerhalb des Verdichtungsraumes an. Der Verdichtungsraum ist daher in dem Sinne abgeschlossen, dass eine Druckerhöhung (Verdichtung) des Gases ermöglicht wird.

Weiterhin wird erfindungsgemäß die Flüssigkeit mittels des Berieselungskreislaufes umgewälzt, das heißt vom Verdichtungsraum, insbesondere von einem Boden des Verdichtungsraumes, zur Berieselungsanlage gepumpt und mittels der Berieselungsanlage wieder innerhalb des Verdichtungsraumes verteilt. Mittels des Berieselungskreislaufes wird die verteilte Flüssigkeit zur Berieselungsanlage rückgeführt. Dadurch bildet sich ein Berieselungskreislauf für die Flüssigkeit aus, wobei die Wärme, die bei der Verdichtung des Gases erzeugt wird, in direktem Kontakt mit der Flüssigkeit auf die Flüssigkeit wenigstens teilweise übertragen wird. Hierbei ist insbesondere ein feines Versprühen der Flüssigkeit mittels der Berieselungsanlage von Vorteil.

Durch das erfindungsgemäße Verfahren wird somit vorteilhafterweise eine thermisch effiziente Verdichtung des Gases ermöglicht, bei der die bei der Verdichtung erzeugte Wärme in direktem stofflichen Kontakt auf die Flüssigkeit, die gleichzeitig zur Verdichtung des Gases vorgesehen ist, wenigstens teilweise übertragen wird.

Ein weiterer Vorteil der vorliegenden Erfindung ist, dass grundsätzlich die verwendete Menge an Flüssigkeit und an Gas nicht beschränkt ist, sodass ausreichend viel Flüssigkeit zur Wärmeübertragung verwendet werden kann.

Die erfindungsgemäße Vorrichtung zur Durchführung eines Verfahrens gemäß der vorliegenden Erfindung und/oder einer ihrer Ausgestaltung umfasst wenigstens einen Verdichtungsraum zur Verdichtung eines Gases, einen Zwischenbehälter zur Aufnahme einer Flüssigkeit, eine erste Pumpe zum Pumpen der Flüssigkeit vom Zwischenbehälter in den Verdichtungsraum, einen Berieselungskreislauf mit einer Berieselungsanlage und einer zweiten Pumpe, wobei mittels der zweiten Pumpe wenigstens ein Teil der Flüssigkeit vom Verdichtungsraum zur Berieselungsanlage pumpbar ist, und wobei die zur Berieselungsanlage gepumpte Flüssigkeit mittels der Berieselungsanlage innerhalb des Verdichtungsraumes verteilbar, insbesondere versprühbar, besonders bevorzugt fein versprühbar, ist.

Es ergeben sich zum erfindungsgemäßen Verfahren und/oder einer seiner Ausgestaltungen gleichartige und gleichwertige Vorteile der erfindungsgemäßen Vorrichtung.

Gemäß einer vorteilhaften Ausgestaltung der Erfindung erfolgt das Pumpen der Flüssigkeit vom Zwischenbehälter in den Verdichtungsraum mittels einer ersten Pumpe, und das Pumpen der Flüssigkeit vom Verdichtungsraum zur Berieselungsanlage mittels einer zweiten Pumpe.

Hierbei umfasst der Berieselungskreislauf die zweite Pumpe. Folglich ist die erste Pumpe als Verdichtungspumpe und die zweite Pumpe als Umwälzpumpe für die Flüssigkeit innerhalb des Berieselungskreislaufes ausgebildet beziehungsweise vorgesehen. Mit anderen Worten wird die Flüssigkeit aus dem Zwischenbehälter in den Verdichtungsraum mittels der ersten Pumpe eingepumpt. Dadurch steigt der Flüssigkeitspegel innerhalb des Verdichtungsraumes an, wodurch das Gas innerhalb des Verdichtungsraumes verdichtet wird. Mit anderen Worten leistet die erste Pumpe wenigstens die Verdichtungsarbeit. Hierbei wird bei der Verdichtung des Gases typischerweise Wärme erzeugt. Mittels der zweiten Pumpe wird die in den Verdichtungsraum eingeleitete Flüssigkeit, beispielsweise vom Boden des Verdichtungsraumes, wenigstens teilweise mittels des Berieselungskreislaufes zur Berieselungsanlage gepumpt. Mittels der Berieselungsanlage wird die dadurch umgewälzte Flüssigkeit innerhalb des Verdichtungsraumes verteilt, insbesondere versprüht. Die zweite Pumpe muss daher lediglich den Druckverlust der Berieselungsanlage überwinden und wälzt die Flüssigkeit um.

In einer vorteilhaften Weiterbildung der Erfindung wird das Gas nach Erreichen eines Schwellendruckes aus dem Verdichtungsraum ausgeleitet, wobei eine Speicherung des ausgeleiteten Gases mittels eines Druckgasspeichers erfolgt.

Mit anderen Worten wird das verdichtete Gas aus dem Verdichtungsraum beim Erreichen eines festgelegten Druckes, der durch den Schwellendruck gekennzeichnet ist, aus dem Verdichtungsraum ausgeleitet und mittels des Druckgasspeichers gespeichert. Die bei der Verdichtung erzeugte Wärme ist hierbei wenigstens teilweise, insbesondere im Wesentlichen vollständig, auf die Flüssigkeit übertragen worden.

Es ist daher von Vorteil die Flüssigkeit nach der Ausleitung des Gases mittels der zweiten Pumpe in den Zwischenbehälter zurück zu pumpen.

Mit anderen Worten wird die Flüssigkeit mittels der zweiten Pumpe nach der Verdichtung und Ausleitung des Gases in den Zwischenbehälter rückgepumpt. Alternativ oder ergänzend kann das Rückführen der Flüssigkeit in den Zwischenbehälter durch einen Höhenunterschied zwischen dem Verdichtungsraum und dem Zwischenbehälter erfolgen. Dies könnte jedoch zu viel Zeit erfordern. Daher ist es von Vorteil mittels der zweiten Pumpe, die durch den Berieselungskreislauf umfasst ist, die Flüssigkeit in den Zwischenbehälter zurück zu pumpen. Hierzu kann ein Ventil innerhalb des Berieselungskreislaufes umgeschaltet werden. Wird vorteilhafterweise während des Ausleiten der Flüssigkeit aus dem Verdichtungsraum in den Zwischenbehälter eine Gaszufuhr bezüglich des Gases zum Verdichtungsraum geöffnet, so wird durch den sinkenden Flüssigkeitspegel der Flüssigkeit innerhalb des Verdichtungsraumes neues Gas in den Verdichtungsraum eingesaugt. Dadurch ist der ursprüngliche Ausgangszustand wieder hergestellt und die Verdichtung des Gases kann erneut erfolgen.

Es ist somit vorteilhaft die Verdichtung des Gases für eine neue Gasmenge mehrmals zu wiederholen bis eine Temperatur der Flüssigkeit innerhalb des Zwischenbehälters oberhalb eines Schwellenwertes erreicht wird.

Hierbei ist der Zwischenbehälter von besonderem Vorteil, da typischerweise die spezifische Wärmekapazität von Flüssigkeiten, beispielsweise Wasser, deutlich höher ist als die von Gasen, beispielsweise Luft. Dadurch ist typischerweise ein einmaliges Verdichten (einmaliger Hub) für die Verdichtung des Gases zwar ausreichend, jedoch steigt hierbei die Temperatur der Flüssigkeit wenig. Um Wärme (Kompressionswärme) mit einer ausreichend oder vorteilhaften Temperatur zu speichern sind daher typischerweise mehrere Hübe erforderlich. Hierbei ist eine Temperatur der Flüssigkeit von wenigstens 90 Grad Celsius von Vorteil. Mit anderen Worten wird der Schwellenwert der Temperatur beispielsweise zu 90 Grad Celsius festgelegt. Es zeigte sich, dass eine Temperatur von wenigstens 90 Grad Celsius nach etwa zehn Hüben, das heißt nach zehn Verdichtungen des Gases und Rückführungen der Flüssigkeit in den Zwischenbehälter erreicht werden kann. Hierbei wird für jeden neuen Hub neues Gas, das heißt eine neue Gasmenge des Gases, in den Verdichtungsraum eingeleitet. Die Anzahl der Hübe kann vom verwendeten Gas und von der verwendeten Flüssigkeit, das heißt von der Stoffpaarung, abhängig sein.

Gemäß einer vorteilhaften Ausgestaltung der Erfindung wird die Flüssigkeit nach dem Erreichen des Schwellenwertes ihrer Temperatur vom Zwischenbehälter zu einem Wärmespeicher gepumpt, und der Wärmespeicher wird mittels der durch die Verdichtung des Gases aufgenommenen Wärme der Flüssigkeit wenigstens teilweise beladen.

Hierbei ist es besonders bevorzugt die Flüssigkeit direkt als Wärmespeichermedium des Wärmespeichers zu verwenden und somit die Flüssigkeit und dessen Wärme mittels des Wärmespeichers zu speichern.

In einer vorteilhaften Weiterbildung der Erfindung wird die Flüssigkeit nach dem Wärmespeicher zu einem Vorratsbehälters mittels einer dritten Pumpe gepumpt, wobei eine Zwischenspeicherung der Flüssigkeit mittels des Vorratsbehälters erfolgt.

Mit anderen Worten wird vorteilhafterweise die Flüssigkeit, deren Wärme wenigstens teilweise, insbesondere größtenteils, insbesondere vollständig, mittels des Wärmespeichers gespeichert wurde, zum Vorratsbehälter gepumpt und mittels des Vorratsbehälters zwischengespeichert. Hierbei ist der Vorratsbehälter vorgesehen, damit das mehrmalige Verdichten des Gases und das Rückpumpen der Flüssigkeit in den Zwischenbehälter vom Speichern der Wärme mittels des Wärmespeichers entkoppelt werden. Mit dem mehrmaligen Verdichten des Gases wird ein erneutes Verdichten einer neuen Gasmenge des Gases bezeichnet. Es wird somit nicht dieselbe Gasmenge mehrmals verdichtet. Mit anderen Worten wird das gleiche Gas und nicht dasselbe Gas wieder verdichtet. Allerdings kann ein mehrmaliges Verdichten desselben Gases vorgesehen sein.

Gemäß einer vorteilhaften Ausgestaltung der Erfindung wird wenigstens ein Teil der Flüssigkeit innerhalb des Vorratsbehälters mittels der zweiten Pumpe und/oder mittels der dritten Pumpe vom Vorratsbehälter über den Berieselungskreislauf zur Berieselungsanlage gepumpt.

Mit anderen Worten wird vorteilhafterweise die im Vorratsbehälter zurückgehaltene Flüssigkeit dem Berieselungskreislauf zugeführt. Dadurch geht eine restliche Wärme, die die Flüssigkeit nach dem Wärmespeicher gegebenenfalls aufweist, vorteilhafterweise nicht verloren, sondern wird wiederum der Flüssigkeit innerhalb des Verdichtungsraumes über die Berieselungsanlage zugeführt. Die Wärme bleibt daher im Kreislauf der Flüssigkeit erhalten. Dadurch wird vorteilhafterweise die Effizienz des Verfahrens in Bezug auf die Speicherung der bei der Verdichtung erzeugten Wärme verbessert. Die Kopplung des Vorratsbehälters mit dem Berieselungskreislauf kann mittels eines Ventils, insbesondere eines Dreiwegeventils, erfolgen.

In einer vorteilhaften Weiterbildung der Erfindung wird das Gas nach seiner Ausleitung aus dem Verdichtungsraum und vor seiner Speicherung mittels des Druckgasspeichers einem ersten Wärmetauscher zugeführt, wobei mittels des ersten Wärmetauschers wenigstens ein Teil der Wärme des ausgeleiteten Gases auf die Flüssigkeit innerhalb des Berieselungskreislaufes übertragen wird.

Vorteilhafterweise wird dadurch eine restliche Wärme des Gases, die bei der Verdichtung nicht auf die Flüssigkeit übertragen wurde, nach seiner Verdichtung und vor seiner Speicherung mittels des Druckgasspeichers dem Gas entzogen und auf die Flüssigkeit innerhalb des Berieselungskreislaufes beziehungsweise innerhalb des Verdichtungsraumes übertragen. Somit wird diese restliche Wärme auf die Flüssigkeit übertragen, wodurch der Wirkungsgrad des Verfahrens deutlich verbessert wird.

Gemäß einer vorteilhaften Ausgestaltung der Erfindung wird das mittels des Druckgasspeichers gespeicherte Gas einer Expansionsturbine zur Expansion des gespeicherten Gases zugeführt.

Mit anderen Worten wird das unter Druck gespeicherte Gas mittels der Expansionsturbine expandiert, wodurch beispielsweise mittels eines mit der Expansionsturbine gekoppelten Generators elektrischer Strom erzeugt beziehungsweise bereitgestellt wird. Hierbei kann aufgrund des Druckgasspeichers der elektrische Strom unabhängig von der Verdichtung des Gases und der Zuführung des elektrischen Stromes zur ersten und/oder zweiten Pumpe bereitgestellt werden.

In einer vorteilhaften Weiterbildung der Erfindung wird das mittels der Expansion abgekühlte Gas einem zweiten Wärmetauscher eines Kältekreislaufes zur Kühlung eines Kältemittels zugeführt.

Das mittels der Expansionsturbine expandierte Gas weist typischerweise eine niedrige Temperatur, insbesondere eine Temperatur unterhalb von 0 Grad Celsius, auf. Dadurch kann vorteilhafterweise Kälte bereitgestellt werden, die auf ein Kältemittel, welches innerhalb eines Kältekreislaufes zirkuliert, mittels des zweiten Wärmetauschers übertragen werden kann.

Es ist besonders bevorzugt mittels der Kälte des Kältemittels einen Kältespeicher des Kältekreislaufes zu beladen.

Die auf das Kältemittel übertragene Kälte wird vorteilhafterweise mittels des Kältespeichers gespeichert. Mit anderen Worten wird vorteilhafterweise neben der mittels des Wärmespeichers bereitstellbaren Wärme ebenfalls Kälte bereitgestellt beziehungsweise bereitstellbar. Dadurch kann vorteilhafterweise Kälte für einen späteren Zeitpunkt bereitgestellt werden, und insbesondere von der Verdichtung des Gases zeitlich entkoppelt werden.

Gemäß einer vorteilhaften Ausgestaltung der Erfindung werden die erste und zweite Pumpe zur Speicherung elektrischer Energie in Form des verdichteten Gases verwendet, wobei weiterhin die gespeicherte elektrische Energie wenigstens teilweise mittels eines mit der Expansionsturbine gekoppelten Generators wieder bereitgestellt wird.

Mit anderen Worten wird das Verfahren zur Speicherung von elektrischem Strom verwendet. Hierbei wird der ersten und zweiten Pumpe elektrische Energie zugeführt, das Gas verdichtet, die Wärme gespeichert und das verdichtete Gas mittels des Druckgasspeichers gespeichert. Ist zu einem späteren Zeitpunkt elektrischer Strom erforderlich, so wird das mittels des Druckgasspeichers gespeicherte Gas der Expansionsturbine zugeführt und mittels des mit der Expansionsturbine gekoppelten Generators elektrischer Strom erzeugt. Hierbei ist besonders vorteilhaft, dass dadurch das expandierte Gas abkühlt und wiederum zum Beladen eines Kältespeichers herangezogen werden kann. Ebenfalls wird die bei der Verdichtung erzeugte Wärme mittels des Wärmespeichers gespeichert, sodass die den Pumpen zugeführte elektrische Energie in Form von Wärme, Kälte und/oder elektrischer Energie gespeichert oder bereitgestellt wird. Mit anderen Worten stellt die erfindungsgemäße Verdichtung des Gases gemäß der vorliegenden Erfindung und/oder einer ihrer Ausgestaltungen ein vorteilhaftes Verfahren zur Speicherung von elektrischer Energie sowie ein vorteilhaftes Verfahren zur Bereitstellung von Wärme und/oder Kälte bereit.

Die mittels des erfindungsgemäßen Verfahrens und/oder einer seiner Ausgestaltungen betriebene Vorrichtung kann somit als Stromspeicher, Wärmespeicher und/oder Kältespeicher verwendet werden beziehungsweise ist als Stromspeicher, Wärmespeicher und/oder Kältespeicher ausgebildet.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1     eine erste Ausgestaltung der vorliegenden Erfindung; und

Figur 2     ein Flussdiagramm des erfindungsgemäßen Verfahrens.

Gleichartige, gleichwertige oder gleichwirkende Elemente können in einer der Figuren oder in den Figuren mit denselben Bezugszeichen versehen sein.

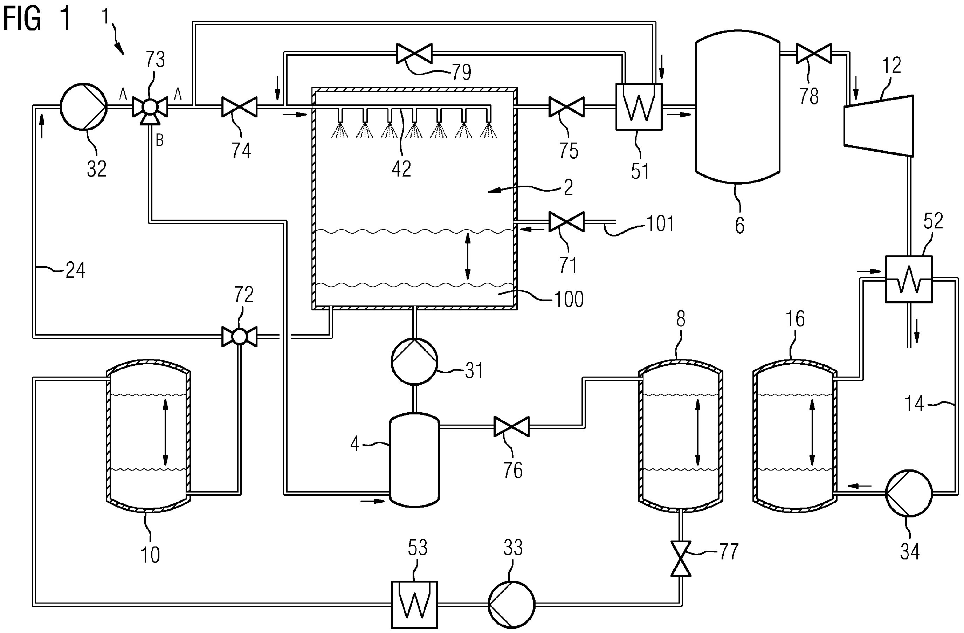

Die Figur 1 zeigt eine schematische Darstellung einer Vorrichtung 1 gemäß einer Ausgestaltung der vorliegenden Erfindung, die zur Durchführung eines Verfahrens gemäß der vorliegenden Erfindung und/oder einer ihrer Ausgestaltungen geeignet, vorgesehen oder ausgebildet ist.

Die Vorrichtung 1 umfasst einen Verdichtungsraum 2, der beispielsweise als abgeschlossener Druckbehälter ausgebildet ist. Weiterhin umfasst die Vorrichtung 1 einen Zwischenbehälter 4 (erster Behälter), der zur Aufnahme einer Flüssigkeit 100 ausgebildet ist oder diese umfasst. Weiterhin umfasst die Vorrichtung 1 einen Berieselungskreislauf 24, eine Berieselungsanlage 42, eine erste Pumpe 31 und eine zweite Pumpe 32, einen Zwischenbehälter 10 (zweiter Behälter) sowie einen Druckgasspeicher 6.

Zunächst wird mittels einer Gaszufuhr 101 ein Gas in den Verdichtungsraum 2 eingeleitet. Dies kann mittels eines Ventils 71 erfolgen und gesteuert werden. Mittels der ersten Pumpe 31 wird die Flüssigkeit 100 aus dem Zwischenbehälter 4 in den Verdichtungsraum 2 eingeleitet beziehungsweise eingepumpt. Durch das Einpumpen der Flüssigkeit 100 aus dem Zwischenbehälter 4 in den Verdichtungsraum 2 mittels der ersten Pumpe 31 wird das dem eingeleiteten Gas zur Verfügung stehende Volumen verkleinert. In diesem Sinne stellt die eingeleitete Flüssigkeit 100 ein Verdrängungsmedium in Bezug auf das eingeleitete Gas dar. Mit anderen Worten wird durch das Einpumpen der Flüssigkeit 100 in den Verdichtungsraum 2 das eingeleitete Gas verdichtet, und somit der Druck des Gases erhöht.

Typischerweise erhöht sich bei der Verdichtung des Gases seine Temperatur. Mit anderen Worten wird die mittels der ersten Pumpe 31 verrichtete Verdichtungsarbeit in Wärme und in die Verdichtung, das heißt in die Druckerhöhung des Gases gewandelt. Damit die bei der Verdichtung des Gases erzeugte Wärme nicht vollständig verloren ist, ist erfindungsgemäß der Berieselungskreislauf 24 sowie die Berieselungsanlage 42 vorgesehen. Durch die Berieselung, das heißt die Verteilung, insbesondere feine Versprühung der Flüssigkeit 100 innerhalb des Verdichtungsraumes 2 mittels der Berieselungsanlage 42 wird eine vergrößerte Wärmeübertragungsfläche zwischen dem Gas und der Flüssigkeit 100 innerhalb des Verdichtungsraumes 2 bereitgestellt. Durch die vergrößerte Wärmeübertragungsfläche wird die Wärmeübertragung vom Gas auf die Flüssigkeit 100 deutlich verbessert.

Mittels der zweiten Pumpe 32 wird die Flüssigkeit 100 innerhalb des Verdichtungsraumes 2 umgewälzt und wieder mittels der Berieselungsanlage 42 innerhalb des Verdichtungsraumes 2 verteilt, insbesondere fein versprüht. Der Berieselungskreislauf 24 entnimmt hierbei die Flüssigkeit 100 von einem Boden des Verdichtungsraumes 2 und pumpt diese mittels der zweiten Pumpe 32 zur Berieselungsanlage 42, die in der Nähe einer Decke des Verdichtungsraumes 2 angeordnet ist. Von dort wird die Flüssigkeit 100 innerhalb des Verdichtungsraumes 2 verteilt, insbesondere feinteilig versprüht. Die hierbei erzeugten Flüssigkeitstropfen weisen zum Gas eine vergrößerte Wärmeübertragungsfläche auf, sodass die Wärmeübertragung vom Gas auf die Flüssigkeit 100 verbessert wird. Die Einleitung der Flüssigkeit 100 zur Berieselungsanlage 42 kann mittels eines vierten Ventils 74 gesteuert werden. Hierbei umfasst der Berieselungskreislauf 24 das vierte Ventil 74. Weiterhin weist der Berieselungskreislauf 24 ein drittes Ventil 73 auf, welches während der Verdichtung (Kompressionsvorgang) des Gases die Position beziehungsweise die Stellung A-A aufweist.

Ist ein festgelegter Schwellendruck des Gases innerhalb des Verdichtungsraumes 2 erreicht, so wird mittels eines fünften Ventils 75 das Gas aus dem Verdichtungsraum 2 ausgeleitet und zum Druckgasspeicher 6 geführt. Mittels des Druckgasspeichers 6 kann das verdichtete Gas für eine spätere Verwendung gespeichert beziehungsweise zwischengespeichert werden.

Zur Wiederholung der Verdichtung für eine neue Gasmenge des Gases ist es zweckmäßig die Flüssigkeit 100 aus dem Verdichtungsraum 2 wieder auszuleiten. Hierzu wird das dritte Ventil 73 auf die Stellung A-B umgeschaltet. Dadurch wird es mittels der zweiten Pumpe 32 möglich die Flüssigkeit 100 aus dem Verdichtungsraum 2, insbesondere vom Boden des Verdichtungsraumes 2, zurück zum Zwischenbehälter 4 zu pumpen. Alternativ oder ergänzend könnte die Flüssigkeit 100 innerhalb des Verdichtungsraumes 2 gravitativ, beispielsweise aufgrund eines Höhenunterschiedes, zum Zwischenbehälter 4 zurückfließen. Dies ist jedoch typischerweise zu langsam, sodass das Pumpen der Flüssigkeit 100 zurück zum Zwischenbehälter 4 mittels der Pumpe 32 bevorzugt ist.

Wird während des Auspumpens der Flüssigkeit 100 zurück zum Zwischenbehälter 4 das erste Ventil 71 der Gaszufuhr 101 geöffnet, so wird durch den sinkenden Flüssigkeitspegel innerhalb des Verdichtungsraumes 2 wieder eine neu Gasmenge des Gases in den Verdichtungsraum 2 eingesaugt. Mit anderen Worten kann somit der Ausgangszustand - Gas innerhalb des Verdichtungsraumes 2 und Flüssigkeit 100 im Zwischenbehälter 4, Flüssigkeit 100 nicht im Verdichtungsraum 2 - wieder hergestellt werden. Nun kann die neue Gasmenge mittels eines Einpumpens der Flüssigkeit 100 vom Zwischenbehälter 4 in den Verdichtungsraum 2 mittels der ersten Pumpe 31 wieder verdichtet werden.

Typischerweise sind für eine vorteilhaft hohe Temperatur der Flüssigkeit 100 mehrere Verdichtungen beziehungsweise mehrere Wiederholungen oder Hübe erforderlich. Das ist deshalb der Fall, da die spezifische Wärmekapazität von Flüssigkeiten, beispielsweise Wasser, deutlich höher ist als die von Gasen, beispielsweise Luft. Dies führt dazu, dass durch eine einmalige Verdichtung (einmaliger Hub) die Wärme aus dem Gas zwar größtenteils entzogen wird, die Temperatur der Flüssigkeit 100 jedoch hierbei nur geringfügig ansteigt. Um eine ausreichend hohe Temperatur, beispielsweise oberhalb von 90 Grad Celsius zu erreichen, sind typischerweise - gegebenenfalls abhängig von der Stoffpaarung - etwa zehn Hübe beziehungsweise Verdichtungen erforderlich.

Ist eine festgelegte vorteilhaft hohe Temperatur der Flüssigkeit 100 erreicht, beispielsweise oberhalb von 90 Grad Celsius, so wird die Flüssigkeit 100 vom Zwischenbehälter 4 mittels einem Öffnen eines sechstens Ventils 76 zu einem Wärmespeicher 8 geleitet. Mittels des Wärmespeichers 8 wird die Wärme der Flüssigkeit 100, die diese durch die Verdichtung des Gases 2 aufgenommen hat, wenigstens teilweise gespeichert oder wenigstens teilweise zwischengespeichert. Hierbei kann die Flüssigkeit 100 direkt als Speichermedium für den Wärmespeicher 8 verwendet werden. Alternativ oder ergänzend kann die Wärme der Flüssigkeit 100 wenigstens teilweise auf ein Wärmespeichermedium des Wärmespeichers 8 übertragen werden. Wird die Flüssigkeit 100 direkt als Wärmespeichermedium innerhalb des Wärmespeichers 8 verwendet, so kann diese, beispielsweise mittels eines siebten Ventils 77 und mittels einer dritten Pumpe 33, einem dritten Wärmetauscher 53 zugeführt werden, wobei mittels des dritten Wärmetauschers 53 die Wärme, die bei der Verdichtung erzeugt wurde und mittels der Flüssigkeit 100 gespeichert wurde, für einen Wärmeverbraucher wenigstens teilweise bereitgestellt wird.

Nach dem dritten Wärmetauscher 53 wird die Flüssigkeit 100 zu einem Vorratsbehälter 10 mittels der dritten Pumpe 33 gepumpt. Mittels des Vorratsbehälters 10 wird die Flüssigkeit 100 für eine erneute Verwendung innerhalb des Berieselungskreislaufes 24 zurückgehalten. Beispielsweise wird diese mittels eines zweiten Ventils 72 dem Berieselungskreislauf 24 erneut zugeführt. Dadurch wird vorteilhafterweise restliche Wärme der Flüssigkeit 100, die diese nach dem Wärmespeicher 8 oder nach dem dritten Wärmetauscher 53 noch aufweist, wieder innerhalb des Berieselungskreislaufes 24 wenigstens teilweise verwendet und diesem wenigstens teilweise wieder zugeführt.

Das verdichtete Gas wird mittels eines fünften Ventils 75 aus dem Verdichtungsraum 2 ausgeleitet und zum Druckgasspeicher 6 geführt. Zwischen dem Verdichtungsraum 2 und dem Druckgasspeicher 6 ist ein erster Wärmetauscher 51 vorgesehen. Mittels des ersten Wärmetauschers 51 kann eine restliche Wärme des ausgeleiteten Gases zurück zum Berieselungskreislauf 24 geführt werden. Hierbei kann die Rückführung mittels eines neunten Ventils 79 gesteuert werden. Mit anderen Worten wird eine restliche Wärme des Gases mittels des ersten Wärmetauschers 51 auf die Flüssigkeit 100 innerhalb des Berieselungskreislaufes 24 rückübertragen. Hierzu kann die Flüssigkeit 100 innerhalb des Berieselungskreislaufes 24 über ein neuntes Ventil 79 dem ersten Wärmetauscher 51 zugeführt werden. Dadurch erfolgt vorteilhafterweise eine wenigstens teilweise Rückführung einer restlichen Wärme des verdichteten Gases.

Das mittels des Druckgasspeichers 6 gespeicherte verdichtete Gas kann mittels eines achten Ventils 78 einer Expansionsturbine 12, insbesondere einer Druckluftturbine, beispielsweise mit einem angeschlossenen Generator, zugeführt werden. Mittels der Expansionsturbine 12 wird das verdichtete Gas aus dem Druckgasspeicher 6 expandiert. Mittels der Expansionsturbine 12 und des Generators kann somit durch die Expansionsarbeit des Gases elektrische Energie, das heißt elektrischer Strom erzeugt und bereitgestellt werden. Nach der Expansion des Gases weist dieses typischerweise eine geringe Temperatur, beispielsweise unterhalb von 0 Grad Celsius, auf. Diese niedrige Temperatur des Gases kann dazu verwendet werden, Kälte bereitzustellen. Demnach ist in der dargestellten Ausführungsform der vorliegenden Erfindung ein zweiter Wärmetauscher 52 vorgesehen, der mit einem Kältekreislauf 14 thermisch gekoppelt ist. Der Kältekreislauf 14 weist einen Kältespeicher 16 sowie eine vierte Pumpe 34 auf, wobei die vierte Pumpe 34 zum Umwälzen eines Kältemittels innerhalb des Kältekreislaufes 14 vorgesehen ist. Das expandierte Gas wird dem zweiten Wärmetauscher 52 zugeführt, wobei die Kälte des expandierten Gases auf das innerhalb des Kältekreislaufes 14 zirkulierende Kältemittel mittels des zweiten Wärmetauschers 52 übertragen wird. Die übertragende Kälte wird mittels des Kältespeichers 16 gespeichert.

Mit anderen Worten kann mittels der dargestellten Ausführungsform der Erfindung elektrischer Strom, Wärme und/oder Kälte gespeichert und/oder bereitgestellt werden. Hierbei weist die Vorrichtung 1 einen hohen Wirkungsgrad, insbesondere oberhalb von 50 Prozent, in Bezug auf die den Pumpen 31, 32 eingangs zugeführte elektrische Energie auf. Die elektrische Energie wird größtenteils durch die erste Pumpe 31 bezogen, die die Verdichtungsarbeit an dem Gas innerhalb des Verdichtungsraumes 2 leistet. Für den Betrieb der zweiten Pumpe 32 ist ebenfalls elektrische Energie vorgesehen, wobei die zweite Pumpe 32 lediglich den Druckverlust in Bezug auf die Berieselungsanlage 42 kompensieren muss. Mit anderen Worten muss die zweite Pumpe 32 nur eine Umwälzarbeit für die Flüssigkeit 100 leisten.

Ein wesentlicher Vorteil der vorliegenden Erfindung ist, dass durch die Berieselungsanlage 42 und die Verteilung, insbesondere durch eine feine Versprühung der Flüssigkeit 100, eine besonders effektive Wärmeübertragung von dem zu verdichteten Gas auf die Flüssigkeit 100 ermöglicht wird. Hierbei erfüllt die Flüssigkeit 100 erfindungsgemäß wenigstens zwei technische Funktionen. Zum einen wird diese zur Verdichtung des Gases innerhalb des Verdichtungsraumes 2 und zum anderen zur Aufnahme und gegebenenfalls Speicherung der bei der Verdichtung erzeugten Wärme verwendet. Erfindungsgemäß werden wenigstens diese zwei technischen Funktionen synergetisch kombiniert, sodass eine Verdichtung des Gases mit einer möglichst effektiven Wärmeübertragung zwischen dem Gas und der Flüssigkeit 100 ermöglicht wird.

Die Flüssigkeit 100 ist bevorzugt Wasser, wobei das Wasser weitere Bestandteil und/oder Verunreinigungen umfassen kann. Das Gas ist bevorzugt Luft.

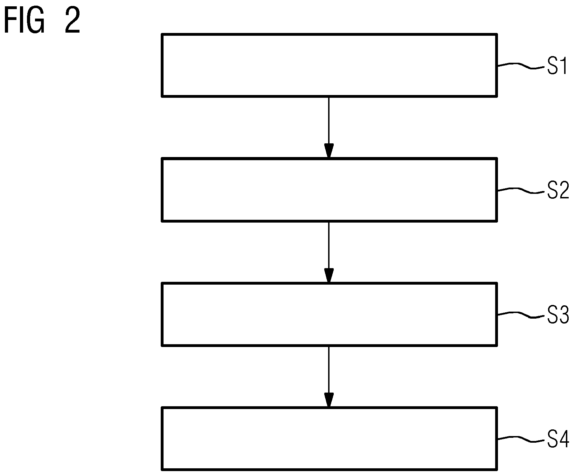

In Figur 2 ist ein schematisches Flussdiagramm des erfindungsgemäßen Verfahrens dargestellt. Hierbei wird auf die in Figur 1 dargestellten Elemente Bezug genommen.

In einem ersten Schritt S1 des erfindungsgemäßen Verfahrens zur Verdichtung eines Gases wird das Gas in den Verdichtungsraum 2 für seine Verdichtung eingeleitet.

Dies kann über das erste Ventil 71 der Gaszufuhr 101 erfolgen.

In einem zweiten Schritt S2 des erfindungsgemäßen Verfahrens wird die Flüssigkeit 100 aus einem Zwischenbehälter 4 in den wenigstens teilweise mit dem Gas gefüllten Verdichtungsraum 2 gepumpt.

Bevorzugt erfolgt das Einpumpen der Flüssigkeit 100 mittels der ersten Pumpe 31.

In einem dritten Schritt S3 des erfindungsgemäßen Verfahrens wird wenigstens ein Teil der Flüssigkeit 100 mittels des Berieselungskreislaufes 24 vom Verdichtungsraum 2 zu einer Berieselungsanlage 42 gepumpt.

Dies kann besonders bevorzugt mittels der zweiten Pumpe 32 erfolgen.

In einem vierten Schritt S4 des erfindungsgemäßen Verfahrens wird die Flüssigkeit 100 mittels der Berieselungsanlage 42 innerhalb des Verdichtungsraumes 2 verteilt, insbesondere fein versprüht.

Gemäß einer Ausgestaltung der Erfindung kann in einem fünften Schritt S5 (nicht dargestellt) das Gas nach Erreichen eines Schwellendruckes aus dem Verdichtungsraum 2 ausgeleitet werden und mittels des Druckgasspeichers 6 gespeichert werden.

Hierbei kann die Ausleitung des Gases mittels des fünften Ventils 75 erfolgen.

In einer Weiterbildung der Erfindung wird in einem sechsten Schritt S6 (nicht dargestellt) nach der Ausleitung des Gases die Flüssigkeit 100 mittels der zweiten Pumpe 32 in den Zwischenbehälter 4 rückgepumpt.

Hierbei wird das dritte Ventil 73 von seiner ursprünglichen Stellung A-A auf die Stellung A-B umgeschaltet. Dadurch wird mittels der zweiten Pumpe 32 die Flüssigkeit 100 vom Verdichtungsraum 2 zurück zum Zwischenbehälter 4 gepumpt.

Gemäß einer weiteren Ausgestaltung der Erfindung wird in einem siebten Schritt S7 während des Zurückpumpens der Flüssigkeit 100 in den Zwischenbehälter 4 eine neue Gasmenge des Gases mittels der Gaszufuhr 101 in den Verdichtungsraum 2 eingesaugt oder eingeleitet.

Dadurch wird der Anfangszustand gemäß des ersten Schrittes S1 wiederhergestellt. Mit anderen Worten können die Schritte S1 bis S6 wiederholt werden. Dadurch erfolgt eine Verdichtung des neuen Gases (weiterer Hub). Die Schritte S1 bis S6 können somit ein oder mehrmals wiederholt werden, bis eine Temperatur der Flüssigkeit 100 innerhalb des Zwischenbehälters 4 oberhalb eines Schwellenwertes erreicht wird. Bevorzugt liegt der Schwellenwert oberhalb von 90 Grad Celsius.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| | |
|---|---|
| 1 | Vorrichtung |
| 2 | Verdichtungsraum |
| 4 | Zwischenbehälter |
| 6 | Druckgasspeicher |
| 8 | Wärmespeicher |
| 10 | Vorratsbehälter |
| 12 | Expansionsturbine |
| 14 | Kältekreislauf |
| 16 | Kältespeicher |
| 24 | Berieselungskreislauf |
| 31 | erste Pumpe |
| 32 | zweite Pumpe |
| 33 | dritte Pumpe |
| 34 | vierte Pumpe |
| 42 | Berieselungsanlage |
| 51 | erster Wärmetauscher |
| 52 | zweiter Wärmetauscher |
| 53 | dritter Wärmetauscher |
| 71 | erstes Ventil |
| 72 | zweites Ventil |
| 73 | drittes Ventil |
| 74 | viertes Ventil |
| 75 | fünftes Ventil |
| 76 | sechstes Ventil |
| 77 | siebtes Ventil |
| 78 | achtes Ventil |
| 79 | neuntes Ventil |
| 100 | Flüssigkeit |
| 101 | Gaszufuhr |
| S1 | erster Schritt |
| S2 | zweiter Schritt |
| S3 | dritter Schritt |
| S4 | vierter Schritt |
| S5 | fünfter Schritt |
| S6 | sechster Schritt |
| S7 | siebter Schritt |

**Patentansprüche**

1. Verfahren zur Verdichtung eines Gases, bei dem das Gas in einen Verdichtungsraum (2) für seine Verdichtung eingeleitet wird, bei dem eine Flüssigkeit (100) aus einem Zwischenbehälter (4) in den wenigstens teilweise mit dem Gas gefüllten Verdichtungsraum (2) gepumpt wird, bei dem wenigstens ein Teil der Flüssigkeit (100) mittels eines Berieselungskreislaufes (24) vom Verdichtungsraum (2) zu einer Berieselungsanlage (42) gepumpt wird, und bei dem mittels der Berieselungsanlage (42) eine Verteilung der Flüssigkeit (100) innerhalb des Verdichtungsraumes (2) erfolgt.

2. Verfahren gemäß Anspruch 1, bei dem das Pumpen der Flüssigkeit (100) vom Zwischenbehälter (4) in den Verdichtungsraum (2) mittels einer ersten Pumpe (31) erfolgt, und bei dem das Pumpen der Flüssigkeit (100) vom Verdichtungsraum (2) zur Berieselungsanlage (42) mittels einer zweiten Pumpe (32) des Berieselungskreislaufes (24) erfolgt.

3. Verfahren gemäß Anspruch 2, bei dem das Gas nach Erreichen eines Schwellendruckes aus dem Verdichtungsraum (2) ausgeleitet wird, und bei dem eine Speicherung des ausgeleiteten Gases mittels eines Druckgasspeichers (6) erfolgt.

4. Verfahren gemäß Anspruch 3, bei dem die Flüssigkeit (100) nach der Ausleitung des Gases mittels der zweiten Pumpe (32) in den Zwischenbehälter (4) rückgepumpt wird.

5. Verfahren gemäß Anspruch 4, bei dem die Schritte gemäß den vorhergehenden Ansprüchen ein- oder mehrmals wiederholt werden, bis eine Temperatur der Flüssigkeit (100) innerhalb des Zwischenbehälters (4) oberhalb eines Schwellenwertes erreicht wird.

6. Verfahren gemäß Anspruch 5, bei dem der Schwellenwert oberhalb von 90 Grad Celsius festgelegt wird.

7. Verfahren gemäß Anspruch 5 oder 6, bei dem die Flüssigkeit (100) nach dem Erreichen des Schwellenwertes ihrer Temperatur vom Zwischenbehälter (4) zu einem Wärmespeicher (8) gepumpt wird, und bei dem der Wärmespeicher (8) mittels der durch die Verdichtung des Gases aufgenommene Wärme der Flüssigkeit (100) wenigstens teilweise beladen wird.

8. Verfahren gemäß Anspruch 7, bei dem die Flüssigkeit (100) nach dem Wärmespeicher (8) zu einem Vorratsbehälter (10) mittels einer dritten Pumpe (33) gepumpt wird, und bei dem eine Zwischenspeicherung der Flüssigkeit (100) mittels des Vorratsbehälters (10) erfolgt.

9. Verfahren gemäß Anspruch 8, bei dem wenigstens ein Teil der Flüssigkeit (100) innerhalb des Vorratsbehälters (10) mittels der zweiten Pumpe (32) und/oder der dritten Pumpe (33) vom Vorratsbehälter (10) über den Berieselungskreislauf (24) zur Berieselungsanlage (42) gepumpt wird.

10. Verfahren gemäß einem der Ansprüche 3 bis 9, bei dem das Gas nach seiner Ausleitung aus dem Verdichtungsraum (2) und vor seiner Speicherung mittels des Druckgasspeichers (6) einem ersten Wärmetauscher (51) zugeführt wird, wobei mittels des ersten Wärmetauschers (51) wenigstens ein Teil der Wärme des ausgeleiten Gases auf die Flüssigkeit (100) innerhalb des Berieselungskreislaufes (24) übertragen wird.

11. Verfahren gemäß einem der Ansprüche 3 bis 10, bei dem das mittels des Druckgasspeichers (6) gespeicherte Gas einer Expansionsturbine (12) zur Expansion des gespeicherten Gases zugeführt wird.

12. Verfahren gemäß Anspruch 11, bei dem das mittels der Expansion abgekühlte Gas einem zweiten Wärmetauscher (52) eines Kältekreislaufes (14) zur Kühlung eines Kältemittels zugeführt wird.

13. Verfahren gemäß einem der vorhergehenden Ansprüche, bei dem mittels der Kälte des Kältemittels ein Kältespeicher (16) des Kältekreislaufes (14) beladen wird.

14. Verfahren gemäß einem der Ansprüche 11 bis 13, bei dem die erste und zweite Pumpe (31, 32) zur Speicherung elektrischer Energie in Form des verdichten Gases verwendet werden, und bei dem die gespeicherte elektrische Energie wenigstens teilweise mittels eines mit der Expansionsturbine (6) gekoppelten Generators wieder bereitgestellt wird.

15. Vorrichtung (1) zur Durchführung eines Verfahrens gemäß einem der vorhergehenden Ansprüche, umfassend einen Verdichtungsraum (2) zur Verdichtung eines Gases, einen Zwischenbehälter (4) zur Aufnahme einer Flüssigkeit (100), eine erste Pumpe (31) zum Pumpen der Flüssigkeit vom Zwischenbehälter (4) in den Verdichtungsraum (2), einen Berieselungskreislauf (24) mit einer Berieselungsanlage (42) und einer zweiten Pumpe (32), wobei mittels der zweiten Pumpe (32) wenigstens ein Teil der Flüssigkeit (100) vom Verdichtungsraum (2) zur Berieselungsanlage (42) pumpbar ist, wobei die zur Berieselungsanlage (42) gepumpte Flüssigkeit (100) mittels der Berieselungsanlage (42) innerhalb des Verdichtungsraumes (2) verteilbar ist.

FIG 1

FIG 2

S1

S2

S3

S4

EP 3 599 440 A1

**EP 3 599 440 A1**

Europäisches Patentamt
European Patent Office
Office européen des brevets

# EUROPÄISCHER RECHERCHENBERICHT

Nummer der Anmeldung

EP 18 18 5185

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2015/121036 A1 (SIEMENS AG [DE]) 20. August 2015 (2015-08-20) * Seite 17, Zeile 15 - Seite 21, Zeile 21; Ansprüche; Abbildungen * * Zusammenfassung * ----- | 1-15 | INV. F28C3/06 F02C1/00 F02C1/02 F02C1/04 |
| A | WO 2007/137315 A2 (INT INNOVATIONS LTD [AU]; MAYER MICHAEL [AT]; PFEIFER BERND PETER [AT]) 6. Dezember 2007 (2007-12-06) * Seite 4, letzter Zeile - Seite 6, Absatz 2; Ansprüche; Abbildungen * * Zusammenfassung * ----- | 1-15 | |
| A | US 2017/107903 A1 (PAGE IAN M [US]) 20. April 2017 (2017-04-20) * Absätze [0002], [0003] * * Absatz [0016] - Absatz [0052]; Ansprüche; Abbildungen * * Zusammenfassung * ----- | 1-15 | |
| A | US 2017/350586 A1 (LEE UEN DO [KR] ET AL) 7. Dezember 2017 (2017-12-07) * Absatz [0028] - Absatz [0052]; Ansprüche; Abbildungen * * Zusammenfassung * ----- | 1-15 | RECHERCHIERTE SACHGEBIETE (IPC) F28C F28F F02K F02C |
| A | WO 2017/167464 A1 (SIEMENS AG [DE]) 5. Oktober 2017 (2017-10-05) * Seite 10, Zeile 31 - Seite 17, Zeile 10; Ansprüche; Abbildungen * * Zusammenfassung * ----- | 1-15 | |

Der vorliegende Recherchenbericht wurde für alle Patentansprüche erstellt

| Recherchenort | Abschlußdatum der Recherche | Prüfer |
|---|---|---|
| München | 25. Januar 2019 | Zerf, Georges |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**

EP 18 18 5185

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2019

| Im Recherchenbericht angeführtes Patentdokument | Datum der Veröffentlichung | Mitglied(er) der Patentfamilie | Datum der Veröffentlichung |
|---|---|---|---|
| WO 2015121036 A1 | 20-08-2015 | DE 102014202846 A1 | 20-08-2015 |
| | | EP 3066309 A1 | 14-09-2016 |
| | | KR 20160120325 A | 17-10-2016 |
| | | US 2016356553 A1 | 08-12-2016 |
| | | WO 2015121036 A1 | 20-08-2015 |
| WO 2007137315 A2 | 06-12-2007 | AT 487868 T | 15-11-2010 |
| | | AT 503734 A1 | 15-12-2007 |
| | | AU 2007266295 A1 | 06-12-2007 |
| | | BR PI0712746 A2 | 11-09-2012 |
| | | CA 2652928 A1 | 06-12-2007 |
| | | CN 101484683 A | 15-07-2009 |
| | | EP 2029878 A2 | 04-03-2009 |
| | | ES 2356091 T3 | 04-04-2011 |
| | | JP 2009539005 A | 12-11-2009 |
| | | KR 20090018619 A | 20-02-2009 |
| | | RU 2008152408 A | 20-07-2010 |
| | | US 2009229265 A1 | 17-09-2009 |
| | | WO 2007137315 A2 | 06-12-2007 |
| | | ZA 200809859 B | 25-11-2009 |
| US 2017107903 A1 | 20-04-2017 | US 2016053682 A1 | 25-02-2016 |
| | | US 2017107903 A1 | 20-04-2017 |
| | | WO 2014159525 A1 | 02-10-2014 |
| US 2017350586 A1 | 07-12-2017 | CN 107110486 A | 29-08-2017 |
| | | KR 101603316 B1 | 15-03-2016 |
| | | US 2017350586 A1 | 07-12-2017 |
| | | WO 2016099208 A1 | 23-06-2016 |
| WO 2017167464 A1 | 05-10-2017 | DE 102016205359 A1 | 05-10-2017 |
| | | WO 2017167464 A1 | 05-10-2017 |

EPO FORM P0461

Für nähere Einzelheiten zu diesem Anhang : siehe Amtsblatt des Europäischen Patentamts, Nr.12/82